# NOUVEAU FASCICULE DE BREVET EUROPEEN

(11) **EP 0 440 566 B2**
(45) Date de publication et mention de la décision concernant l'opposition: **29.07.1998**
(45) Mention de la délivrance du brevet: 27.10.1993
(21) Numéro de dépôt: 91400253.0
(22) Date de dépôt: 01.02.1991
(51) Int. Cl.: F16L 25/00, F16L 37/08

(54) **Tube à emboîtement en matériau plastique et procédé de fabrication d'un tel tube**
Muffenrohr aus Kunststoff sowie Herstellungsverfahren dafür
Plastic sleeve tube and its process of manufacture

(30) Priorité: 02.02.1990 FR 9001256
(43) Date de publication de la demande: 07.08.1991
(73) Titulaire: EUROTUB, F-84270 Vedene (FR)
(72) Inventeur: Bove, Bruno, F-84170 Montfavet (FR)
(74) Mandataire: Desaix, Anne

(56) Documents cités:
- EP-A- 125 382
- EP-A- 271 598
- DE-A- 2 406 211
- US-A- 3 897 090
- US-A- 4 558 889
- US-A- 4 747 621
- COMMISSION ELECTROTECHNIQUE INTERNATIONALE, COMITE D'ETUDES No 23: Petit Appareillage, SOUS-COMITE No 23A: Conduits de Protection des Conducteurs, Dec. 1989
- Prospectus FF-KABUFLEX, Fränkische Rohrwerke, Produktbeschreibung 7.1/03

## Description

La présente invention est relative à un procédé de fabrication d'un tube à emboîtement réalisé en matériau plastique, de préférence en polyéthylène ou en chlorure de polyvinyle mais plus généralement en tout matériau susceptible notamment de présenter des propriétés thermosoudables. L'invention concerne également le tube obtenu par la mise en oeuvre de ce procédé.

Il est bien connu dans la technique, lorsqu'on souhaite réaliser une canalisation continue de grande longueur, de mettre en oeuvre des éléments successifs identiques, dont les dimensions sont habituellement standards et qui sont emboités ou emmanchés de l'un à l'autre en autant d'éléments qu'il est nécessaire pour obtenir la longueur de canalisation souhaitée. Ces éléments de tube consécutifs comportent ou sont associés à des moyens de connexion mutuels d'un tube au suivant, qui assurent à la fois une liaison mécanique satisfaisante entre eux et, au niveau de celle-ci, l'étanchéité nécessaire, en particulier si la canalisation doit servir à véhiculer un fluide liquide ou gazeux ou même lorsqu'elle enferme des câbles ou autres fils de transmission pour protéger ceux-ci vis-à-vis de l'atmosphère extérieure.

Une solution dassique pour réaliser une liaison de ce genre, telle que par exemple illustrée dans le FR-A-1 384 638 ou le DE-A-2406211, consiste à ménager par déformation plastique à l'une des extrémités d'un élément de tube quelconque une partie de diamètre plus important que la partie courante de cet élément, destinée à recevoir par emboîtement, à coulissement axial notamment, l'extrémité non déformée de l'élément suivant, les deux tubes ainsi emmanchés dans le prolongement l'un de l'autre, étant ensuite collés ensemble ou soudés à chaud, ou encore réunis par une bague externe vissée ou ancrée au moyen d'un dip sur la surface externe des deux éléments une fois emboîtés l'un dans l'autre.

Une telle solution exige, en fabrication, des opérations relativement délicates pour successivement chauffer l'extrémité d'un élément, introduire dans celui-ci un mandrin de déformation sur une distance exactement contrôlée, puis assurer le collage ou la soudure des deux éléments une fois emboîtés l'un dans l'autre, cette dernière opération devant s'effectuer sur le chantier avec un matériel approprié. Il en résulte un accroissement du prix de revient de cette fabrication et du montage de la canalisation, préjudiciable à une économie optimale du système.

En variante, on a également prévu de souder, en bout de l'élément de tube, une pièce injectée distincte, préalablement fabriquée et destinée à recevoir l'extrémité d'un autre élément, cette solution évitant l'usage d'un mandrin, mais impliquant une opération de liaison complémentaire avant que l'emboîtement ne soit réalisé, avec, là encore, les inconvénients de la première solution.

D'autres techniques sont également connues, qui consistent notamment à abouter deux éléments de même diamètre et à les souder ensemble par leurs extrémités amenées en contact direct, en particulier par thermosoudage au moyen d'un miroir chauffant ou d'un autre dispositif analogue, ou encore en réunissant les deux éléments par un manchon court les recouvrant mutuellement sur une distance appropriée, ce manchon contenant une résistance électrique, intégrée dans son épaisseur, pour assurer par thermosoudage la jonction du matériau des éléments de tube et les réunir de façon intime avec le manchon, en assurant l'étanchéité de l'ensemble.

Mais, cette solution présente également l'inconvénient d'une intervention parfois difficile à exécuter avec précision sur le chantier de montage lui-même, la mise en oeuvre d'un manchon à résistance électrique entrainant en outre un coût parfois prohibitif, par rapport à celui des éléments de tube eux-mêmes.

Enfin, une autre technique consiste à utiliser un manchon de liaison du genre précédent mais dépourvu de résistance électrique, ce manchon comportant généralement une collerette médiane interne sur laquelle viennent buter les extrémités en regard des deux éléments de tube et qui recouvre partiellement l'un et l'autre de ces éléments. Lorsque ceux-ci sont réalisés en chlorure de polyvinyle (PVC), les deux côtés du manchon sont collés ou thermosoudés sur les éléments; lorsqu'ils sont réalisés en polyéthylène et présentent une structure externe annelée, c'est-à-dire avec une surface régulièrement ondulée, le manchon comporte dans ses deux parties, de part et d'autre de la collerette médiane, des saillies formant des nervures continues ou des ergots qui s'engagent dans deux gorges appartenant respectivement à l'un et à l'autre des éléments de tube pour assurer mécaniquement la connexion de ceux-ci en même temps que leur solidarisation avec le manchon. Cependant, des joints d'étanchéité doivent être prévus et disposés entre le manchon et les éléments de tube, ce qui complique là également le montage et entraîne un accroissement du prix de revient et de la main d'oeuvre.

La présente invention concerne un procédé de fabrication d'un tube à emboîtement selon la revendication 1, ainsi qu'un tube obtenu par ce procédé qui pallie les inconvénients des solutions rappelées ci-dessus, notamment en évitant l'adjonction entre deux éléments de tube successifs à raccorder ensemble d'un manchon séparé à mettre en place puis à solidariser sur le chantier avec les deux éléments par des moyens de soudage ou de connexion équivalents, entraînant un surcroît d'intervention et par suite, un coût de réalisation sensiblement augmenté.

Le tube à emboîtement selon l'invention présente ainsi l'avantage, vis-à-vis des solutions dassiques, notamment à manchon séparé réunissant deux éléments successifs, de n'exiger qu'un embout surinjecté de dimension longitudinale moitié, puisque directement solidarisé de l'un des éléments en bout de celui-ci, ce qui réduit dans la même proportion le prix de revient correspondant et en outre, élimine toute opération de mise en place préalable d'un tel manchon séparé sur les deux éléments à réunir et de soudure ou collage de celui-ci.

En outre, l'emboîtement de deux éléments successifs peut être réalisé avec un joint d'étanchéité, monté dans une gorge du second élément, dans la partie de celui-ci qui s'engage dans l'embout surinjecté du premier.

De préférence, la gorge recevant le joint est décalée par rapport à celles recevant les nervures, en direction de la partie ouverte de l'embout surinjecté.

Dans un mode de réalisation particulier de l'invention, l'embout surinjecté comporte deux nervures ou ergots qui sont respectivement engagées dans la seconde et la troisième gorges du second élément de tube à partir de l'extrémité de celui-ci qui pénètre dans l'embout du premier élément, le joint d'étanchéité étant de préférence monté dans la cinquième gorge.

Le joint d'étanchéité disposé dans une gorge du second élément peut, selon le cas, en particulier selon l'application envisagée, être un joint torique, à lèvre ou en forme de "T".

En outre, et selon une autre caractéristique, l'embout comporte dans sa partie ouverte une zone terminale évasée, déterminant un angle d'ouverture compris entre 20 et 40°, et de préférence égal à 30°.

D'autres caractéristiques d'un tube à emboîtement établi conformément à l'invention et du procédé de fabrication d'un tel tube, apparaîtront encore à travers la description qui suit d'un exemple de réalisation, donné à titre indicatif et non limitatif, en référence aux dessins annexés sur lesquels :
- la Figure 1 est une vue en coupe longitudinale partielle de l'extrémité d'un élément de tube à surface annelée, comportant selon l'invention, un embout creux, surinjecté sur l'élément;
- la Figure 2 est une vue en coupe longitudinale à plus grande échelle, illustrant l'emboîtement d'un second élément de tube dans l'embout d'un premier élément avec montage d'un joint d'étanchéité;
- les Figures 3 et 4 sont des vues schématiques de variantes de réalisation du joint d'étanchéité représenté sur la Figure 2.

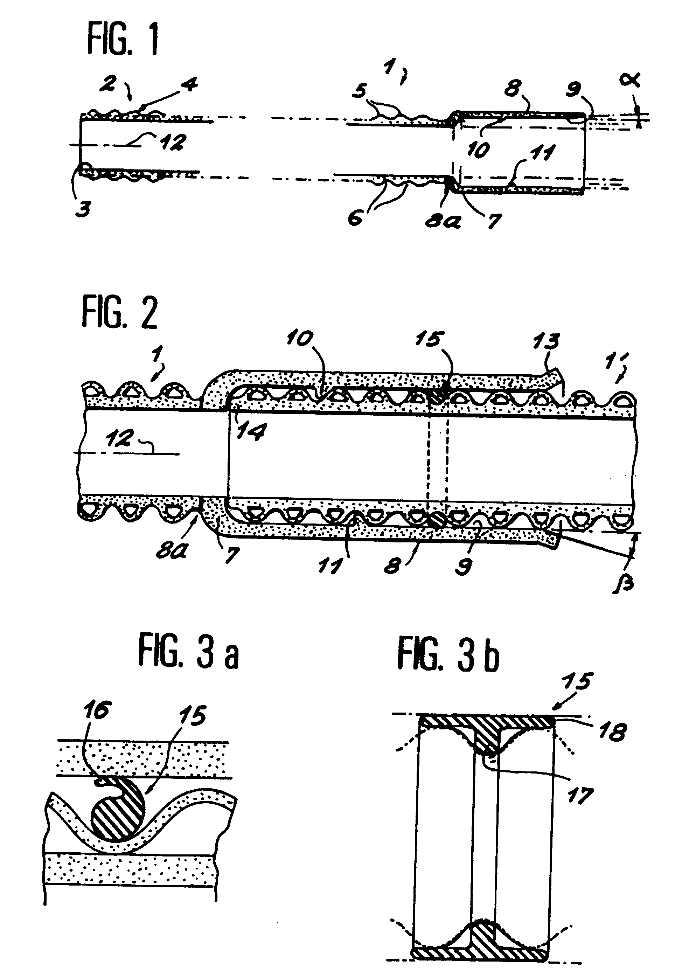

Sur la Figure 1, la référence 1 désigne l'extrémité d'un élément de tube 1 établi conformément à l'invention. Cet élément comporte une partie courante 2, de forme générale cylindrique, délimitant un passage interne et continu 3 sur toute la longueur de l'élément et, dans sa surface externe, un profil annelé 4, constitué par des ondes circulaires successives 5, séparées l'une de l'autre par des gorges en creux 6. L'élément de tube 1 peut être réalisé en tout matériau plastique approprié, notamment en chlorure de polyvinyle (PVC), en polyéthylène ou en polypropylène. Avantageusement, cet élément est réalisé par injection et formage sous pression, selon un procédé d'extrusion en lui-même parfaitement classique, permettant notamment sa fabrication en continu.

Selon l'invention, à l'une des extrémités ouverte 7 de l'élément 1 et lors de la fabrication de celui-ci, est rapporté un embout 8, surinjecté sur l'élément, notamment après extrusion, et solidarisé ainsi avec ce dernier, en assurant dans la zone de jonction mutuelle 8a de ceux-ci une parfaite étanchéité.

L'embout 8 présente une surface interne 9, délimitant un passage cylindrique dont le diamètre mesuré au sommet des ondes 5 dans sa surface annelée extérieure 4, est légèrement supérieur à celui du passage interne 3 de l'élément 1. Il est réalisé dans le même matériau que l'élément de tube 1, éventuellement en un matériau différent Notamment, il peut être translucide afin de mieux visualiser l'intérieur de celui-ci.

Dans sa surface interne 9, l'embout 8 comporte deux nervures, respectivement 10 et 11, circulaires, ou ponctuelles (ergots) s'étendant dans deux plans parallèles distincts, perpendiculaires à l'axe longitudinal 12 de l'élément 1 et de l'embout 8 qui le prolonge, ces nervures étant de préférence séparées l'une de l'autre par une distance déterminée qui correspond, sur l'élément de tube 1, à celle qui sépare les sommets des deux ondes 5 successives. Les nervures ou ergots 10 et 11 présentent une dimension en saillie par rapport à la surface 9 de l'embout surinjecté, qui est par ailleurs sensiblement égale à la profondeur des gorges 6, ménagées entre les ondes 5 de la surface annelée 4, en assurant ainsi l'accrochage mutuel des deux éléments 1 et 1'.

La Figure 2 illustre l'emboîtement réalise entre deux éléments de tube analogues 1 et 1' selon l'invention, l'embout 8 de l'élément 1 surinjecté en 7 à l'extrémité de celui-ci comme indiqué ci-dessus, étant aménage pour recevoir l'extrémité opposée de l'élément 1', dépourvue d'embout.

Pour faciliter l'emboîtement des deux éléments, l'embout surinjecté 8 présente avantageusement, sur l'axe longitudinal 12 commun des deux éléments 1 et 1', une légère conicité, correspondant à un angle α compris de préférence entre 1 et 3°.

Par ailleurs, l'extrémité opposée ouverte 13 de l'embout 8 est évasée vers l'extérieur, avec un angle β compris entre 20 et 40°, et de préférence égal à 30°.

L'élément 1' peut alors être facilement engagé dans l'embout surinjecté 8 de tel le sorte que les nervures en saillie ou ergots 10 et 11 de ce dernier viennent se loger dans deux ondes 5 successives de l'élément 1', correspondant de préférence respectivement à la deuxième et à la troisième ondes de la surface annelée 4. Notamment, l'embout 8 est conçu de telle sorte que, une fois cet emboîtement ainsi réalisé, l'extrémité 14 de l'élément 1' soit disposé au plus près du fond de l'embout 8, au voisinage immédiat de la zone de jonction 7 de ce dernier avec l'élément 1.

Un joint d'étanchéité 15 peut compléter le montage, ce joint étant disposé dans une gorge appropriée 6 de l'élément 1', au-delà des gorges de celui-ci coopérant avec les nervures 10 et 11 de l'embout surinjecté 8. Lorsque celui-ci est translucide, le positionnement du joint dans sa gorge est exactement repéré.

De préférence, la gorge recevant le joint 15 est la cinquième à partir de l'extrémité 14 de l'élément 1', soit donc située deux gorges au-delà de celle qui reçoit la seconde nervure 11.

Le joint 15 peut avoir toute forme appropriée et notamment présenter le profil le mieux adapté pour réaliser l'étanchéité nécessaire entre le fond de la gorge de l'élément 1' qui le reçoit et la surface interne 9 de l'embout 8. Dans l'exemple représenté sur la Figure 2, le joint 15 présente ainsi une forme torique; en variante et comme illustré respectivement sur les Figures 3a et 3b, le joint 15 peut comporter soit une lèvre interne 16, soit un profil en "T", dont la partie médiane 17 pénètre dans la gorge 6, tandis que sa partie transversale 18 vient en appui sur la surface interne 9 de l'embout 8.

On réalise ainsi un tube à emboîtement en matériau plastique de conception très simple et qui présente les avantages déjà mentionnés. L'embout directement venu de fabrication à l'extrémité de l'élément de tube, permet notamment de réduire par moitié l'encombrement présenté dans les solutions classiques par les manchons de raccordement nécessaires; surtout la disposition envisagée évite des opérations de soudage ou de collage de tels manchons sur chantier, l'emboîtement des deux éléments de tube selon l'invention s'effectuant par simple emboîtement mécanique, après mise en place sur l'extrémité de l'un des éléments du joint d'étanchéité nécessaires.

La fabrication des éléments de tube peut être facilement réalisée dans une installation dassique, comportant une extrudeuse-anneleuse, pour la fabrication de tubes annelés, associée à un ensemble d'injection propre à assurer le raccordement direct, à l'extrémité de chaque élément, de l'embout de liaison et la mise en place à l'extrémité opposée de l'élément, du joint d'étanchéité.

## Revendications

1. Procédé pour la fabrication d'un tube à emboîtement à matériau plastique, comportant un élément de tube (1) de forme générale cylindrique, de longueur déterminée, éventuellement standard, de diamètre constant et présentant une surface interne lisse (9) et une structure externe annelée, avec dans sa surface extérieure (4) une succession d'ondes circulaires en relief (5) séparées par des gorges en creux (6), l'une des extrémités (7) de l'élément comportant, rapporté sur celle-ci et venu de fabrication avec l'élément, un embout creux (8), ouvert à sa partie opposée et dont le diamètre interne est légèrement supérieur au diamètre externe de l'élément de tube (1), de telle sorte qu'il puisse recevoir à coulissement ou emmanchement l'extrémité dépourvue d'embout d'un autre élément de tube analogue (1'), en réalisant leur emboîtement mutuel, l'embout (8) étant surinjecté après extrusion sur l'extrémité (7) de l'élément de tube (1) après formation de celui-ci à la sortie d'une presse d'injection, caractérisé en ce que l'embout creux (8) comporte, dans sa surface interne (9), deux nervures circulaires ou ergots (10, 11) en saillie, la distance qui sépare les nervures étant égale à celle qui correspond, dans la structure externe de l'élément de tube (1), à la largeur d'une onde ménagée sur sa surface extérieure (4), de telle sorte que, après emboîtement d'un second élément (1') dans l'embout (8) de l'élément (1), les deux nervures (10, 11) prévues dans la surface interne (9) de l'embout, viennent se loger dans deux gorges successives de la surface extérieure (4) du second élément, les nervures étant ménagées dans l'embout au voisinage de l'extrémité (7) de l'élément de tube (1) sur lequel est rapporté cet embout et, à tout le moins, plus près de cette extrémité que de la partie opposée ouverte de l'embout, lequel présente une forme légèrement conique dont la génératrice détermine avec l'axe (12) de l'élément de tube cylindrique (1) un angle (α) de l'ordre de 1 à 3°, afin de faciliter l'emboîtement du second élément (1') dans l'embout (8) du premier.

2. Procédé selon la revendication 1, caractérisé en ce que l'élément de tube (1) et l'embout (8) sont réalisés dans le même matériau, notamment en chlorure de polyvinyle, polyéthylène, polypropylène ou analogue.

3. Procédé selon l'une des revendications 1 ou 2, caractérisé en ce que l'emboîtement de deux éléments successifs (1) et (1') est réalisé avec un joint d'étanchéité (15), monté dans une gorge (6) du second élément (1') dans la partie de celui-ci qui s'engage dans l'embout (8) du premier.

4. Procédé selon la revendication 3, caractérisé en ce que la gorge (6) recevant le joint (15) est décalée par rapport à celles recevant les nervures ou ergots (10, 11), en direction de la partie ouverte de l'embout (8).

5. Procédé selon l'une des revendications 3 ou 4, caractérisé en ce que le joint d'étanchéité (15) est un joint torique, à lèvre ou en "T".

6. Procédé selon l'une quelconque des revendications 1 à 5, caractérisé en ce que l'embout (8) comporte dans sa partie ouverte une zone terminale (13) évasée, déterminant un angle d'ouverture compris entre 20 et 40°, et de préférence égal à 30°.

7. Procédé selon l'une quelconque des revendications 1 à 6, caractérisé en ce que l'embout (8) surinjecté, est réalisé en un matériau identique à celui de l'élément (1).

8. Procédé selon l'une quelconque des revendications 1 à 7, caractérisé en ce que l'embout (8) est translucide.

9. Tube à emboîtement en matériau plastique obtenu par la mise en oeuvre du procédé selon l'une quelconque des revendications 1 à 8.

## Patentansprüche

1. Verfahren zur Herstellung eines Muffenrohres aus Kunststoff, mit einem Rohrelement (1) von überwiegend zylindrischer Gestalt, bestimmter, eventuell genormter Länge, gleichbleibendem Durchmesser, glatter Innenfläche (9) und äußerer Ringstruktur mit einer Folge erhabener kreisrunder Wellen (5) in ihrer Außenfläche (4), die durch vertiefte Rillen (6) voneinander getrennt sind, wobei eines der Endstücke (7) des Elementes ein an es angesetztes und in der Fertigung mit dem Element hergestelltes hohles Anschlußstück (8) aufweist, das an seinem entgegengesetzten Abschnitt offen ist und dessen Innendurchmesser etwas größer ist als der Außendurchmesser des Rohrelementes (1), derart, daß es durch Einschieben oder Einpressen das kein Anschlußstück aufweisende Endstück eines ähnlichen anderen Rohrelementes (1') unter Erzielung ihrer gegenseitigen Ineinanderschachtelung aufnehmen kann, wobei das Anschlußstück (8) nach dem Strangpressen an das Endstück (7) des Rohrelementes (1) nach dessen Ausbildung am Auslaß einer Spritzpresse durch Spritzgießen angeformt wird,
dadurch gekennzeichnet, daß das hohle Anschlußstück (8) in seiner Innenfläche (9) zwei herausragende kreisrunde Rippen oder Vorsprünge (10, 11) aufweist, wobei der die Rippen trennende Abstand gleich dem Abstand ist, der in der äußeren Struktur des Rohrelementes (1) der Breite einer auf dessen Außenfläche (4) ausgebildeten Welle entspricht, derart, daß nach dem Einfügen eines zweiten Elementes (1') in das Anschlußstück (8) des Elementes (1) die beiden in der Innenfläche (9) des Anschlußstückes vorgesehenen Rippen (10, 11) in zwei aufeinanderfolgenden Rillen der Außenfläche (4) des zweiten Elementes in Stellung kommen, wobei die Rippen im Anschlußstück in der Nähe des Endstücks (7) des Rohrelementes (1), an welches dieses Anschlußstück angesetzt ist, und zumindest näher an diesem Endstück als am offenen, entgegengesetzten Abschnitt des Anschlußstücks ausgebildet sind, das eine leicht konische Gestalt hat, deren Erzeugende mit der Achse (12) des zylindrischen Rohrelementes (1) einen Winkel (α) von etwa 1° bis 3° bildet, um das Einfügen des zweiten Elementes (1') in das Anschlußstück (8) des ersten zu vereinfachen.

2. Verfahren nach Anspruch 1,
dadurch gekennzeichnet, daß das Rohrelement (1) und das Anschlußstück (8) aus demselben Werkstoff, insbesondere aus Polyvinylchlorid, Polyethylen, Polypropylen o.ä. hergestellt sind.

3. Verfahren nach einem der Ansprüche 1 oder 2,
dadurch gekennzeichnet, daß das Ineinanderfügen von zwei aufeinanderfolgenden Elementen (1) und (1') mit einer Dichtung (15) durchgeführt wird, die in einer Rille (6) des zweiten Elementes (1') in dessen Abschnitt angeordnet ist, der in das Anschlußstück (8) des ersten Elementes eindringt.

4. Verfahren nach Anspruch 3,
dadurch gekennzeichnet, daß die die Dichtung (15) aufnehmende Rille (6) gegenüber den die Rippen oder Vorsprünge (10, 11) aufnehmenden Rillen in Richtung des offenen Abschnitts des Anschlußstücks (8) versetzt ist.

5. Verfahren nach einem der Ansprüche 3 oder 4,
dadurch gekennzeichnet, daß die Dichtung (15) ein O-Ring, eine Lippendichtung oder eine T-förmige Dichtung ist.

6. Verfahren nach einem der Ansprüche 1 bis 5,
dadurch gekennzeichnet, daß das Anschlußstück (8) in seinem offenen Abschnitt einen aufgeweiteten Endbereich (13) aufweist, der einen Öffnungswinkel zwischen 20° und 40°, vorzugsweise gleich 30° bildet.

7. Verfahren nach einem der Ansprüche 1 bis 6,
dadurch gekennzeichnet, daß das durch Spritzgießen angeformte Anschlußstück (8) aus einem Werkstoff hergestellt ist, der dem des Elementes (1) gleich ist.

8. Verfahren nach einem der Ansprüche 1 bis 7,
dadurch gekennzeichnet, daß das Anschlußstück (8) durchscheinend ist.

9. Muffenrohr aus Kunststoff, hergestellt durch Durchführen des Verfahrens nach einem der Ansprüche 1 bis 8.

## Claims

1. Process for the manufacture of a tube with socket-jointing made of plastic, comprising a tube component (1) of general cylindrical shape, of specific, optionally standard, length, of uniform diameter and having a smooth inner surface (9) and an annulate outer structure, with a succession of circular waves in relief (5), which are separated by hollow grooves (6), in its outer surface (4), one of the ends (7) of the component comprising, added onto it and arising from manufacture with the component, a hollow end socket (8) open in its opposite part and whose internal diameter is slightly greater than the external diameter of the tube component (1), so that it can receive with sliding or sleevelike fitting the socketless end of another similar tube component (1'), by effecting their mutual socket-jointing, the end socket (8) being injection-overmoulded after extrusion on the end (7) of the tube component (1), after the latter has been formed at the exit of an injection press, characterised in that this hollow end socket (8) comprises in its inner surface (9) two projecting circular ribs or studs (10, 11), the distance which separates the ribs being equal to that which corresponds, in the external structure of the tube component (1), to the width of a wave made in its outer surface (4), so that, after socket-jointing of a second component (1') into the end socket (8) of the component (1), the two ribs (10, 11), provided in the internal surface (9) of the end socket, are lodged in two successive grooves of the outer surface (4) of the second component, the ribs being made in the end socket in the neighbourhood of the end (7) of the tube component (1) onto which this end socket is added and, at the very least, nearer to this end than to the open opposite part of the end socket, which has a slightly conical shape whose generatrix forms an angle (a) of the order of 1 to 3° with the axis (12) of the cylindrical tube component (1) in order to facilitate the socket-jointing of the second component (1') in the end socket (8) of the first one.

2. Process according to claim 1, characterised in that the tube component (1) and the end socket (8) are made of the same material, especially of polyvinyl chloride, polyethylene, polypropylene or the like.

3. Process according to claim 1 or claim 2, characterised in that the socket-jointing of two successive components (1) and (1') is carried out with a seal (15) fitted in a groove (6) of the second component (1') in that part of the latter which is engaged into the end socket (8) of the first one.

4. Process according to claim 3, characterised in that the groove (6) receiving the seal (15) is offset in relation to those receiving the ribs or studs (10, 11) in the direction of the open part of the end socket (8).

5. Process according to claim 3 or claim 4, characterised in that the seal (15) is a ring-, lip- or "T"-seal.

6. Process according to any one of claims 1 to 5, characterised in that the end socket (8) comprises in its open part a flared end region (13) forming an opening angle of between 20° and 40° and preferably of 30°.

7. Process according to any one of claims 1 to 6, characterised in that the injection-overmoulded end socket (8) is made of a material which is identical with that of the component (1).

8. Process according to any one of claims 1 to 7, characterised in that the end socket (8) is translucent.

9. Tube with socket-jointing made of plastic, obtained by using the process according to any one of claims 1 to 8.
